# EUROPÄISCHE PATENTSCHRIFT

(11) **EP 0 965 511 B1**
(45) Veröffentlichungstag und Bekanntmachung des Hinweises auf die Patenterteilung: **08.05.2002**
(21) Anmeldenummer: 99110344.1
(22) Anmeldetag: 28.05.1999
(51) Int. Cl.: B61C 9/50, B61F 3/16, B61F 5/38, B61C 15/14

(54) **Achseinheit für Schienenfahrzeuge**
Axle assembly for railway vehicles
Ensemble-essieu pour véhicules ferroviaires

(30) Priorität: 29.05.1998 DE 19823980
(43) Veröffentlichungstag der Anmeldung: 22.12.1999
(73) Patentinhaber: Deutsches Zentrum für Luft- und Raumfahrt e.V., 53175 Bonn (DE)
(72) Erfinder: Gretzschel, Moritz, 81375 München (DE)
(74) Vertreter: von Kirschbaum, Albrecht, Dipl.-Ing.

(56) Entgegenhaltungen:
- EP-A- 0 770 533
- GB-A- 201 921
- US-A- 5 017 183

## Beschreibung

Die Erfindung betrifft eine Achseinheit für Schienenfahrzeuge, bei welchen den beiden Schienenrädern der Achseinheit zwei drei gliedrige Überlagerungs-Rädersätze zugeordnet sind, von denen jeweils ein erstes Glied mit jeweils einem Schienenrad drehfest gekoppelt ist und jeweils ein zweites Glied mit dem entsprechenden Glied des anderen Überlagerungs-Rädersatzes über eine Welle gleichsinnig drehend gekoppelt ist. Die nachfolgend als solche bezeichnete Achseinheit umfasst die zwei Schienenräder einer Fahrzeugachse eines Schienenfahrzeugs, die über ein Getriebe mechanisch verbunden sind.

Aus EP-0 770 533 A1 ist eine derartige Achseinheit für Schienenfahrzeuge mit zwei dreigliedrigen Überlagerungs-Rädersätzen bekannt. Bei einer Ausführungsform der bekannten Achseinheit ist das dritte Glied des einen Überlagerungs-Radsatzes in Form eines Hohlrades festgelegt, während das dritte Glied des anderen Überlagerungs-Rädersatzes mit einem eigenen Stellantrieb versehen ist. Bei der zweiten Ausführungsform der bekannten Achseinheit verfügt jedes der beiden dritten Glieder in Form von Hohlrädern über einen eigenen, unabhängig wirkenden Stellantrieb. Bei beiden Ausführungsformen der bekannten Achseinheit ist somit konzeptionsbedingt eine gegensinnige Kopplung ausgeschlossen.

Herkömmliche Eisenbahn-Radsätze haben eine starre Welle, auf der die beiden Radscheiben drehfest angebracht sind. Dies ermöglicht zwar die Selbstzentrierung eines Radsatzes mit konischen Laufflächen im Gleis, doch wird die sich ergebende Wellenbewegung des Radsatzes im Gleis in Form eines Sinuslauf ab einer gewissen Grenzgeschwindigkeit instabil. Dies kann bislang durch konstruktive Maßnahmen in der Radsatzaufhängung (Primärfederung) abgemildert werden, doch wird durch solche Maßnahmen wiederum die Bogengängigkeit verschlechtert.

Aufgabe der Erfindung ist es, von außen das Laufverhalten eines Schienenfahrzeugs über die Grenzgeschwindigkeit eines Fahrzeugs mit herkömmlichen Radsätzen hinaus zu stabilisieren sowie einen reibungs- und verschleißarmen Bogenlauf zu erzielen.

Gemäß der Erfindung ist dies mit einer Achseinheit für Schienenfahrzeuge nach dem Oberbegriff des Anspruchs 1 mit den Merkmalen in dessen kennzeichnenden Teil erreicht. Vorteilhafte Weiterbildungen sind Gegenstand der auf den Anspruch 1 unmittelbar oder mittelbar rückbezogenen Ansprüche.

Gemäß der Erfindung kann auf die beiden Schienenräder der Achseinheit mit den zwei dreigliedrigen Überlagerungs-Rädersätzen ein auf beide Räder der Achseinheit gegensinnig wirkendes Relativdrehmoment, unabhängig von einem etwa auf beide Schienenräder der Achseinheit gleichsinnig wirkenden Antriebs- bzw. Bremsdrehmoment, aufgebracht werden. Somit kann gemäß der Erfindung ein gerichtetes, zwischen den Rädern wirkendes Relativmoment in die Achse eingeführt werden.

Damit ist es möglich, durch Beeinflussung dieses Relativmoments von außen den Fahrzeuglauf weit über die Grenzgeschwindigkeit eines herkömmlichen Radsatzes hinaus zu stabilisieren. Ferner kann mit einem gezielt von außen eingeprägten Relativmoment die Achse gelenkt und in Querrichtung positioniert werden, um das Bogenlaufverhalten zu verbessern. Ein etwaiger Antrieb oder ein etwaiges Abbremsen der Achseinheit geschieht gemäß der Erfindung entkoppelt von der Relativmomentbeeinflussung und auf diese rückwirkungsfrei.

Bei der erfindungsgemäßen Lösung ist bei aktiver Regelung des Relativmoments die Spurführung nicht mehr von der Geometrie der Radlaufflächen abhängig.Die Konizität der Räder kann beispielsweise ohne Rücksicht auf die Fahrstabilität so gewählt werden,daß sich optimales Verschleißverhalten einstellt.Darüber hinaus ist auch eine sichere Spurführung von Fahrzeugachsen mit Rädern möglich,die kein typisches Schienenfahrzeug-Radprofil aufweisen, wie zylindrische Räder oder Luftreifen. Damit kann auch das Laufverhalten von gleichermaßen straßen- und schienentauglichen Fahrzeugen deutlich verbessert werden, da über das gezielte Einleiten des Relativmoments ein laterales Laufverhalten wie mit Schienenrädern erzielt werden könnte.

Nachfolgend wird die Erfindung anhand von zwei Ausführungsformen unter Bezugnahme auf die Zeichnungen im einzelnen beschrieben. Es zeigen:
- Fig.1: eine erste bevorzugte Ausführungsform einer Achseinheit gemäß der Erfindung, und
- Fig.2: eine Modifizierung der Ausführung der Achseinheit von Fig.1.

Eine Achseinheit umfaßt zwei Schienenräder 1,1', die durch ein Überlagerungs-Achsgetriebe so miteinander gekoppelt sind, daß durch voneinander getrennte Antriebs- oder Stelleinheiten sowohl ein dem Antrieb oder der Bremsung dienendes, gemeinsames Drehmoment völlig symmetrisch aufgebracht werden kann als auch davon völlig entkoppelt ein auf beide Räder in gegensätzlicher Richtung wirkendes Relativmoment, um die Achseinheit damit lenken oder ihren Lauf stabilisieren zu können.

Das beide Räder verbindende Überlagerungs-Achsgetriebe besteht im wesentlichen aus zwei jeweils mit einem Rad 1, 1' einer aus zwei Radwellen 4 und 4' gebildeten Fahrzeugachse und untereinander gekoppelten dreigliedrigen Überlagerungs-Rädergetrieben. Dazu eignen sich aufgrund kompakter Bauform und reibungsarmer Ausführung vor allem Planetengetriebe, die auch eine hohe Übersetzung von Motorwellen 2, 3 von Motoren 15 bzw. 11 auf die Radwellen 4 und 4' ermöglichen.

Jedes dieser Planetengetriebe besteht aus drei Gliedern, nämlich einem Sonnenrad 5 bzw. 5', einem Planetenradträger 6, bzw. 6' mit Planetenrädern 7, bzw. 7', und einem Hohlrad 8, bzw. 8'. Jeweils ein Glied dieser Überlagerungsgetriebe ist mit einer der Radwellen 4 bzw. 4' drehfest verbunden. Jeweils ein weiteres Glied ist mit dem entsprechenden Glied des anderen Überlagerungsgetriebes gleichsinnig drehend, vorteilhafterweise durch eine als Koppelung wirkende, durchgehende Welle 9 gekoppelt. Für diese Koppelung untereinander eignen sich bei Planetengetrieben insbesondere die schnell drehenden Sonnenräder 5 bzw. 5'. Die Koppelwelle 9 rotiert mit einem Vielfachen der Summe der absoluten Drehzahlen der beiden Räder 1 bzw. 1'.

Für den der Erfindung zugrunde liegenden Gedanken ist es gleichgültig, welches Paar Glieder (Sonnenräder, Planetenträger oder Hohlräder) für die Kopplung der Getriebe untereinander sowie für den Antrieb, welches für die Einleitung des Relativmoments und welches für den Abtrieb an den Fahrzeugrädern verwendet wird. Es müssen immer zwei gleichartige Glieder in gleicher Weise verwendet werden.

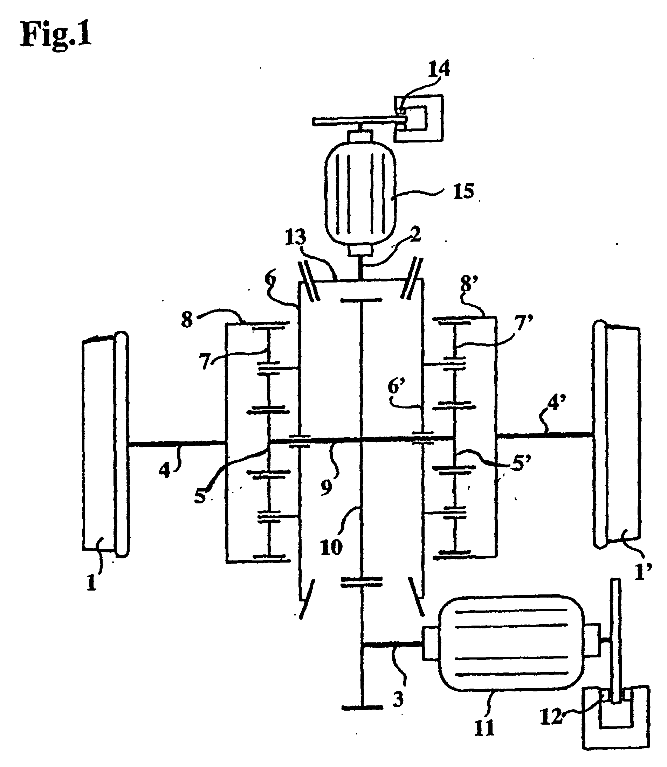

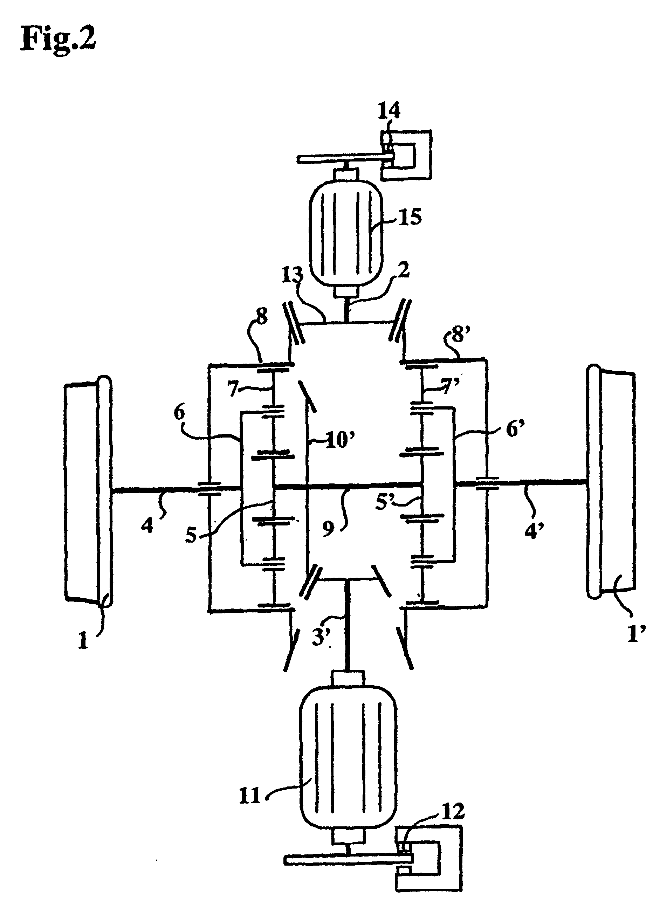

Somit gäbe es rein kombinatorisch sechs Möglichkeiten zur Ausführung der erfindungsgemäßen Achseinheit. Allerdings erscheinen derzeit nur die zwei anhand von Fig.1 und 2 beschriebenen Varianten mit gekoppelten Sonnenrädern technisch besonders sinnvoll, weshalb nur diese schematisch dargestellt sind.

Mittels eines Vorgeleges 10 bzw. 10', das als Kegel- oder Stirnradgetriebe ausgebildet sein kann, kann auf die Koppelwelle 9 mittels eines Antriebsmotors 11 oder einer Bremse 12 ein Antriebs- oder Bremsmoment aufgebracht werden, welches durch das Achsgetriebe, entsprechend dessen Übersetzung, auf die Räder 1, 1' übertragen wird. Dabei werden beide Räder 1, 1', unabhängig von einer eventuellen Relativverdrehung untereinander, stets mit einem genau gleich verteilten Moment beaufschlagt. Somit ist ein Antreiben oder Abbremsen der Fahrzeugachse ohne Rückwirkung des Relativmoments möglich.

Zum Einleiten dieses Relativmoments sind jeweils die verbleibenden dritten Glieder, nämlich die Hohlräder 8 bzw. 8', der Überlagerungsgetriebe über ein Umkehrgetriebe 13, das vorzugsweise als Kegelradgetriebe ausgebildet ist, in gegensinnigem Drehsinn gekoppelt. Somit beträgt die Drehzahl der Welle 2 stets ein Vielfaches der Relativdrehzahl der beiden Räder 1, 1' untereinander, unabhängig von deren absoluten Drehzahl und somit von der Fahrgeschwindigkeit.

Mit einem auf der Welle 2 wirkenden, passiven, semiaktiven oder aktiven Torsionselement, beispielsweise einer Bremse, einem Drehdämpfer, einem Motor o.ä. kann daher unmittelbar das in der Achseinheit von einem Fahrzeugrad zum anderen übertragene Relativdrehmoment und damit die Relativverdrehung beeinflußt werden. So kann durch Anlegen einer Bremse 14 die Relativverdrehung der Räder gehemmt oder wie mit einem Sperrdifferential ganz unterbunden werden. Die Fahrzeugräder verhalten sich dann wie durch eine starre Welle verbunden.

Bei gelöster Bremse 14 ist die Rotation der Räder voneinander unabhängig. Wird an der Welle 2 kein Moment eingeleitet, sind die beiden Räder 1, 1' bis auf die geringe Trägheit und Reibung des Getriebes von einander völlig entkoppelt. Mit einem Motor 15 kann aktiv geregelt ein gerichtetes Relativmoment beliebiger Richtung zum Lenken in die Achse eingeleitet werden. Bei einer Kombination aus Motor 15 und Bremse 14 ist es möglich, die Motorwelle zu blockieren und damit die Achse zu sperren, ohne daß der Motor dafür ein Moment aufbringen müßte. Aufgrund der besonderen Konstruktion der Achseinheit tritt eine Relativverdrehung der Fahrzeugräder untereinander als unmittelbare Folge eines gestörten Momentengleichgewichts der von den in den Aufstandspunkten der Fahrzeugräder wirkenden Reibkräften erzeugten Momente und dem vom Torsionsglied auf die Welle 2 aufgebrachten Moment ein. Da das Getriebe in keiner Richtung selbsthemmend ist, besteht eine direkte Wechselwirkung in beiden Wirkrichtungen zwischen den Fahrzeugrädern 1, 1' und der Welle 2.

Die Achseinheit kann, wie Fig. 1 und 2 zu entnehmen ist,, vorteilhaft so ausgeführt werden, daß die Relativdrehzahl der Räder 1, 1' auf die Motorwelle 2 ins Schnelle übersetzt wird. Da der Motor 15 dann nur mit reduziertem Moment arbeiten muß, reicht ein verhältnismäßig kleiner, leichter und dafür hochdynamischer Motor aus.

Da ferner Relativdrehzahl im normalen Fahrbetrieb sehr gering ist, kann der Motor 15 in einem vorteilhafteren Drehzahlbereich arbeiten. Ebenso kann das Vorgelege 10 des Antriebsmotors 11 so ausgeführt werden, daß dieser ebenfalls im vorteilhaftesten Drehzahlbereich arbeitet.

## Patentansprüche

1. Achseinheit für Schienenfahrzeuge, bei welcher den beiden Schienenrädern (1, 1') der Achseinheit zwei dreigliedrige Überlagerungs-Rädersätzen (5, 7, 8) zugeordnet sind, von denen jeweils ein erstes Glied mit jeweils einem Schienenrad (1; 1') drehfest gekoppelt ist, und jeweils ein zweites Glied mit dem entsprechenden Glied des anderen Überlagerungs-Rädersatzes über eine Welle (9) gleichsinnig drehend gekoppelt ist,
**dadurch gekennzeichnet, dass** jeweils ein drittes Glied mit dem entsprechenden Glied des anderen Überlagerungs-Rädersatzes über ein Umkehrgetriebe (13) gegensinnig drehend gekoppelt ist,
so dass die Drehzahl der gleichsinnig drehend verbundenen Glieder einem Vielfachen der Summe der absoluten Drehzahlen der beiden Schienenräder (1; 1') unabhängig von deren Relativdrehzahl entspricht, und die Drehzahl der gegensinnig drehend verbundenen Glieder einem Vielfachen der Relativdrehzahl der beiden Schienenräder (1; 1') unabhängig von deren absoluten Drehzahl entspricht, und
somit ein auf beide Räder der Achseinheit gegensinnig wirkendes Relativdrehmoment, unabhängig von einem etwaigen auf beide Schienenräder der Achseinheit gleichsinnig wirkenden Antriebs- bzw. Bremsdrehmoment, aufbringbar ist.

2. Achseinheit nach Anspruch 1, **dadurch gekennzeichnet, daß** das auf die beiden Schienenräder gegensinnig wirkende Relativdrehmoment durch eine auf die beiden gegensinnig drehend verbundenen Glieder der Überlagerungs-Rädersätze einwirkende mechanisch Bremse erzeugt wird, die einer Relativverdrehung beider Schienenräder (1,1') unabhängig von deren Relativdrehzahl entgegenwirkt.

3. Achseinheit nach Anspruch 1, **dadurch gekennzeichnet, daß** das auf die beiden Schienenräder gegensinnig wirkende Relativdrehmoment durch eine auf die beiden gegensinnig drehend verbundenen Glieder der Überlagerungs-Rädersätze einwirkenden Drehdämpfer erzeugt wird, der einer Relativverdrehung beider Schienenräder (1,1') unabhängig von deren Relativdrehzahl entgegenwirkt.

4. Achseinheit nach einem der Ansprüche 2 oder 3, **dadurch gekennzeichnet, daß** das einer Relativverdrehung beider Schienenräder entgegenwirkende Relativdrehmoment während des Betriebs innerhalb gewisser Grenzen semiaktiv regelbar ist.

5. Achseinheit nach Anspruch 1, **dadurch gekennzeichnet, daß** das auf die beiden Schienenräder gegensinnig wirkende Relativdrehmoment durch einen auf die beiden gegensinnig drehend verbundenen Glieder der Überlagerungs-Rädersätze einwirkenden, aktiv geregelten Momenterzeuger in beliebiger Wirkrichtung erzeugt wird.

6. Achseinheit nach Anspruch 1, **dadurch gekennzeichnet, daß** der aktiv geregelte Momenterzeuger ein Motor ist.

7. Achseinheit nach Anspruch 5 und 6, **dadurch gekennzeichnet, daß** durch eine auf der Welle des das Relativmoment erzeugenden Motors angebrachte Bremse die Drehung der Motorwelle und somit die Relativverdrehung der beiden Schienenräder bremsbar oder unterbindbar ist, ohne daß der Motor dazu ein Drehmoment aufbringen muß.

8. Achseinheit nach einem der Ansprüche 1 bis 7, **dadurch gekennzeichnet, daß** über die beiden gleichsinnig drehend verbundenen Glieder der Überlagerungs-Rädersätze auf beide Fahrzeugräder (1; 1') unabhängig von deren Relativdrehzahl ein in gleicher Richtung und mit gleichem Betrag wirkendes Antriebsoder Bremsmoment von einem Antriebsmotor (11) über eine Stirnrad-(3,10) oder Kegelrad-Vorgelegestufe (3', 10') aufbringbar ist, ohne das Relativmoment zu beeinflussen.

9. Achseinheit nach einem der Ansprüche 1 bis 7, **dadurch gekennzeichnet, daß** durch eine auf die gleichsinnig drehend verbundenen zweiten Glieder des Getriebes wirkende Bremse ein in gleicher Richtung und mit gleichem Betrag wirkendes Bremsmoment auf beide Fahrzeugräder (1; 1') unabhängig von deren Relativdrehzahl aufbringbar ist, ohne damit das Relativmoment zu beeinflussen.

10. Achseinheit nach den Ansprüchen 8 und 9, **dadurch gekennzeichnet, daß** die auf die gleichsinnig drehend verbundenen Glieder des Getriebes wirkende Bremse (12) auf der Welle (3, 3') des Antriebsmotors (11) der Fahrzeugachseinheit angebracht ist.

## Claims

1. An axle assembly for rail vehicles on which the two rail wheels (1, 1') of the axle assembly are assigned two triple-membered planetary gear trains (5, 7, 8) of which each first member is non-rotatively coupled to a rail wheel (1;1') and each second member is rotatively coupled to the corresponding member of the other planetary gear train via a shaft (9) in the same sense of rotation, **characterized in that** a third member in each case is opposingly rotatively coupled to the corresponding member of the other planetary gear train via a reversing gear unit (13)
so that the speed of the members rotatively coupled in the same sense of rotation is a multiple of the sum of the absolute speeds of the two rail wheels (1; 1') regardless of their relative speed, and the speed of the members rotatively coupled in the opposite sense of rotation is a multiple of the relative speed of the two rail wheels (1; 1') regardless of their absolute speed,
and thus a relative torque acting opposingly on both wheels of the axle assembly is applicable regardless of any traction or braking torque acting on both rail wheels of the axle assembly.

2. The axle assembly as set forth in claim 1, **characterized in that** the relative torque acting opposingly on both rail wheels is generated by a mechanical brake acting on the two members of the planetary gear trains rotatively coupled opposingly, the brake opposing a relative torsion of both rail wheels (1, 1') regardless of their relative speed.

3. The axle assembly as set forth in claim 1, **characterized in that** the relative torque acting opposingly on both rail wheels is generated by a rotary damper acting on the two members of the planetary gear trains rotatively coupled opposingly, the rotary damper opposing a relative torsion of both rail wheels (1,1') regardless of their relative speed.

4. The axle assembly as set forth in claim 2 or claim 3, **characterized in that** the relative torque opposing a relative torsion of both rail wheels can be semi-actively closed loop controlled during operation within certain limits.

5. The axle assembly as set forth in claim 1, **characterized in that** the relative torque acting opposingly on both rail wheels is generated in any desired active direction by an actively closed loop controlled moment generator acting on the two members of the planetary gear trains rotatively coupled opposingly.

6. The axle assembly as set forth in claim 1, **characterized in that** the actively closed loop controlled moment generator is a motor.

7. The axle assembly as set forth in claim 5 or claim 6, **characterized in that** by a brake applied to the shaft of the motor generating the relative moment, the rotation of the motor shaft and thus the relative torsion of the two rail wheels can be braked or inhibited without the motor needing to produce a torque for this purpose.

8. The axle assembly as set forth in any of the claims 1 to 7, **characterized in that** via the two members of the planetary gear trains connected rotatingly in the same sense, a traction or braking moment effective in the same direction and having the same amount can be applied to both rail wheels (1;1') regardless of their relative speed via a spur (3, 10) or bevel (3', 10') gear intermediate stage without influencing the relative moment.

9. The axle assembly as set forth in any of the claims 1 to 7, **characterized in that** by a brake acting on the second members of the final drive gearbox rotatively coupled in the same sense a braking moment acting in the same direction and with the same amount can be applied to both vehicle wheels (1;1') regardless of their relative speed without influencing the relative moment.

10. The axle assembly as set forth in claim 8 or claim 9, **characterized in that** the brake (12) acting on the members of the final drive gearbox rotatively coupled in the same sense is applied to the shaft (3, 3') of the traction motor (11) of the vehicle axle assembly.

## Revendications

1. Ensemble-essieu pour véhicules sur rails dans lequel aux deux roues de rail (1, 1') de l'ensemble-essieu sont liés deux ensembles de roues de superposition (5, 7, 8) à trois éléments à partir desquels un premier élément avec à chaque fois une roue de rail (1 ; 1') est couplé de façon à résister à la torsion et à chaque fois un deuxième élément est couplé de façon à tourner dans le même sens avec l'élément correspondant de l'autre ensemble de roues de superposition au moyen d'un arbre (9)
**caractérisé en ce qu'**à chaque fois un troisième élément est couplé de façon à tourner en sens inverse avec l'élément correspondant de l'autre ensemble de roues de superposition au moyen d'un mécanisme de renversement (13),
de sorte que la vitesse de rotation des éléments liés qui tournent dans le même sens corresponde à un multiple de la somme des vitesses de rotation absolues des deux roues de rail (1, 1') indépendamment de leur vitesse de rotation relative et que la vitesse de rotation des éléments liés qui tournent en sens inverse corresponde à un multiple de la vitesse de rotation relative des deux roues de rail (1, 1') indépendamment de leur vitesse de rotation absolue et
que de cette manière un couple de rotation relatif qui s'exerce en sens inverse sur les deux roues de l'ensemble-essieu peut être produit indépendamment d'un éventuel couple de rotation d'entraînement ou de freinage qui s'exerce dans le même sens sur les deux roues de rail de l'ensemble-essieu.

2. Ensemble-essieu selon la revendication 1 **caractérisé en ce que** le couple de rotation relatif qui s'exerce en sens inverse sur les deux roues de rail est produit par un frein à effet mécanique agissant sur les deux éléments des ensembles de roues de superposition liés de façon à tourner en sens inverse, lequel frein s'oppose à une torsion relative des deux roues de rail (1, 1') indépendamment de leur vitesse de rotation relative.

3. Ensemble-essieu selon la revendication 1 **caractérisé en ce que** le couple de rotation relatif qui s'exerce en sens inverse sur les deux roues de rail est produit par un amortisseur de rotation qui exerce un effet sur les deux éléments des ensembles de roues de superposition liés de façon à tourner en sens inverse, lequel amortisseur de rotation s'oppose à une torsion relative des deux roues de rail (1, 1') indépendamment de leur vitesse de rotation relative.

4. Ensemble-essieu selon l'une des revendications 2 ou 3 **caractérisé en ce que** le couple de rotation relatif, qui a un effet en retour s'opposant à une torsion relative des deux roues de rail, peut être réglé de façon semi active dans des limites données au cours du fonctionnement.

5. Ensemble-essieu selon la revendication 1 **caractérisé en ce que** le couple de rotation relatif qui s'exerce en sens inverse sur les deux roues de rail est produit par un générateur de moment réglé activement, dirigé en direction quelconque, à effet sur les deux éléments des ensembles de roues de superposition liés de façon à tourner en sens inverse.

6. Ensemble-essieu selon la revendication 1 **caractérisé en ce que** le générateur de moment réglé activement est un moteur.

7. Ensemble-essieu selon la revendication 5 ou 6 **caractérisé en ce que** la rotation de l'arbre du moteur et donc la torsion relative des deux roues de rail peuvent être freinées ou entravées par un frein appliqué sur l'arbre du moteur qui produit le moment relatif et cela sans que le moteur doive produire à cet effet un couple de rotation.

8. Ensemble-essieu selon l'une des revendications 1 à 7 **caractérisé en ce que** au moyen des deux éléments, liés de façon à tourner dans le même sens, des ensembles de roues de superposition on peut produire à partir d'un moteur d'entraînement (11) au moyen d'une vitesse intermédiaire de la roue droite (3, 10) ou de la roue d'angle (3', 10') un moment d'entraînement ou de freinage, qui s'exerce en même direction avec une même valeur sans influencer le moment relatif, sur les deux roues de véhicule (1 ; 1') indépendamment de leur vitesse de rotation relative.

9. Ensemble-essieu selon l'une des revendications 1 à 7 **caractérisé en ce qu'**un moment de freinage qui s'exerce en même direction avec une même valeur au moyen d'un frein qui s'exerce sur les deuxièmes éléments de l'entraînement liés de façon à tourner dans le même sens peut être appliqué sur les deux roues de véhicule (1 ; 1') indépendamment de leur vitesse de rotation relative sans que cela influence le moment relatif.

10. Ensemble-essieu selon les revendications 8 et 9 **caractérisé en ce que** le frein (12) qui a un effet sur les éléments de l'entraînement liés tournant dans le même sens est placé sur l'arbre (3, 3') du moteur d'entraînement (11) de l'ensemble-essieu du véhicule.
